(19) Europäisches Patentamt
European Patent Office
Office européen des brevets

(11) EP 2 551 738 B1

(12) FASCICULE DE BREVET EUROPEEN

(45) Date de publication et mention de la délivrance du brevet:
**06.05.2015 Bulletin 2015/19**

(51) Int Cl.:
***G05D 1/00*** *(2006.01)* ***G05D 1/08*** *(2006.01)*
***G05D 1/10*** *(2006.01)*

(21) Numéro de dépôt: **12171122.0**

(22) Date de dépôt: **07.06.2012**

(54) **Procédé et dispositif d'estimation automatique d'un vecteur paramètre de vol d'un aéronef, ainsi que méthodes et ensembles de détection d'une panne affectant un tel vecteur.**

Verfahren und Vorrichtung zur automatischen Schätzung eines Parametervektors für den Flug eines Luftfahrzeugs sowie Methoden und Einheiten zur Erkennung einer Störung, die einen solchen Vektor beeinträchtigt.

Method and device for automatically estimating an aircraft flight parameter vector, as well as methods and assemblies for detecting a failure affecting such a vector

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2011 FR 1102330**

(43) Date de publication de la demande:
**30.01.2013 Bulletin 2013/05**

(73) Titulaire: **Airbus Opérations SAS**
**31060 Toulouse (FR)**

(72) Inventeurs:
- **Goupil, Philippe**
  **32600 BEAUPUY (FR)**
- **Cazes, Florian**
  **64600 ANGLET (FR)**
- **Dayre, Rémy**
  **31820 PIBRAC (FR)**
- **Le Berre, Herve**
  **31490 LEGUEVIN (FR)**
- **Mailhes, Corinne**
  **31500 TOULOUSE (FR)**
- **Chabert, Marie**
  **31000 TOULOUSE (FR)**
- **Michel, Patrice**
  **31330 MERVILLE (FR)**

(74) Mandataire: **Gevers France**
**41, avenue de Friedland**
**75008 Paris (FR)**

(56) Documents cités:
**EP-A2- 0 840 225** **DE-A1-102009 061 036**
**FR-A1- 2 936 067**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 551 738 B1

## Description

La présente invention concerne un procédé et un dispositif d'estimation automatique d'un vecteur paramètre de vol utilisé par un système d'un aéronef, en particulier un système de commandes de vol électriques, ainsi que des méthodes et ensembles de détection d'au moins une panne affectant un tel vecteur paramètre de vol.

On sait qu'un système de commandes de vol électriques d'un aéronef, en particulier d'un avion, permet de piloter et de contrôler ce dernier par l'intermédiaire d'un calculateur de commandes de vol. Ce calculateur acquiert une consigne de pilotage qui est donnée par la position des organes de commande en mode de pilotage manuel (à l'aide d'un manche et d'un palonnier) ou par un pilote automatique en mode de pilotage automatique, et il la traduit en objectif de pilotage. Cet objectif de pilotage est ensuite comparé à l'état réel de l'aéronef, qui est obtenu à l'aide de mesures réalisées par des capteurs (anémométriques, clinométriques et inertiels) qui fournissent les valeurs courantes de paramètres de vol (tels que l'accélération, l'incidence,...). Le résultat est utilisé pour calculer, à l'aide de lois de pilotage, une consigne d'asservissement en position de surfaces mobiles (gouvernes) de l'aéronef. L'application d'une commande d'asservissement sur un actionneur lié à une gouverne permet d'ajuster cette dernière à la position voulue et ainsi d'influer sur la trajectoire de l'aéronef.

Afin d'être en conformité avec les exigences de navigabilité en vigueur, la solution usuelle consiste à prendre en compte des mesures issues de capteurs redondants. La mise en oeuvre de cette solution implique l'application de principes de surveillance (à savoir détecter une ou plusieurs sources d'informations défaillantes et les rejeter) et de passivation (à savoir limiter l'effet et la propagation d'une panne). Le fait de calculer une valeur unique valide et de surveiller, en parallèle, l'ensemble des sources constitue un processus dit de consolidation.

La présente invention a notamment pour objet d'estimer au moins un vecteur paramètre (précisé ci-dessous), relatif à au moins un paramètre de vol d'un aéronef, en particulier pour améliorer la disponibilité de données anémométriques, clinométriques et inertielles.

Elle concerne un procédé d'estimation automatique, en temps réel, d'un vecteur paramètre de vol utilisé par un système d'un aéronef, en particulier un système de commandes de vol électriques.

À cet effet, selon l'invention, ledit procédé d'estimation, est remarquable en ce que l'on réalise, de façon automatique, la suite d'étapes successives suivante :

a) on reçoit les valeurs observées (à savoir mesurées ou consolidées, comme précisé ci-dessous) d'une pluralité de valeurs explicatives, une valeur explicative représentant un paramètre de l'aéronef qui est utilisé dans les traitements suivants ;
b) on estime, sur une fenêtre d'observation, un vecteur coefficient qui permet de déterminer une relation linéaire entre le vecteur paramètre de vol recherché et lesdites valeurs explicatives, qui est relative à une modélisation linéaire, en mettant en oeuvre une régression PLS (pour « Partial Least Squares » en anglais) décrite en détail ci-après ;
c) on utilise ce vecteur coefficient estimé qui minimise la puissance de l'erreur de modèle sur la fenêtre d'observation, pour calculer, à l'aide de ladite modélisation linéaire, une valeur estimée dudit vecteur paramètre de vol ; et
d) on transmet la valeur ainsi estimée à des moyens utilisateurs (en vue notamment d'une consolidation et/ou d'une détection de pannes).

Ainsi, grâce à l'invention, comme précisé ci-dessous, on est en mesure d'estimer, en temps réel, de façon rapide, précise et à coût réduit, un vecteur paramètre de vol utilisé dans le contrôle de l'aéronef, et plus particulièrement dans l'élaboration des lois de pilotage.

La mise en oeuvre de la présente invention ne nécessite pas l'installation de nouveaux capteurs ou de jauges spécifiques. Elle peut notamment être réalisée dans un calculateur de vol et permet de disposer en temps réel, avec une précision suffisante pour les applications concernées, d'estimations de certains paramètres de vol.

On notera que :

- le vecteur paramètre de vol estimé conformément à la présente invention peut être utilisé en complément des valeurs mesurées ou calculées de ce paramètre de vol ; et
- l'estimation conforme à l'invention, qui fournit des informations disponibles en temps réel, peut notamment être utilisée par des moyens de consolidation pour prolonger la disponibilité du ou des paramètres de vol considérés.

Dans le cadre de la présente invention :

- ladite fenêtre d'observation est relative à une pluralité d'échantillons successifs, les données étant traitées de façon périodique, chaque valeur successive d'un même paramètre considéré représentant un échantillon ;
- un vecteur paramètre de vol comprend au moins une valeur dudit paramètre de vol. Ce vecteur paramètre de vol peut comporter une pluralité d'échantillons successifs de cette valeur (selon la fenêtre d'observation). Ce vecteur paramètre de vol peut également comprendre une pluralité de valeurs dudit paramètre de vol, issues d'une pluralité de sources d'informations différentes (capteurs, moyens de consolidation) de l'aéronef. Dans ce cas, si on considère N échantillons, il est défini sous forme d'une matrice. Ce vecteur paramètre de vol peut également comprendre une pluralité de paramètres de vol.

Dans un mode de réalisation particulier, on effectue les opérations b) et c) de façon itérative, en utilisant la régression PLS et des valeurs observées (c'est-à-dire mesurées ou éventuellement consolidées) dudit vecteur paramètre de vol.

L'invention prévoit donc d'estimer au moins un paramètre de vol *y* à l'aide de *q* paramètres de vol différents ($x_1, x_2,..., x_q$), dits variables explicatives. En d'autres termes, on considère un système à au moins une sortie (le paramètre de vol *y* à estimer) et à *q* entrées ($x_1, x_2,..., x_q$), lesdites variables explicatives. Les entrées et les sorties sont observées sur un horizon fini de *N* échantillons (les calculateurs de commandes de vol visés étant numériques). La fenêtre d'observation est notée $F_n$ = [n - *N* + 1,...,*n*], *n* étant l'instant d'échantillonnage courant. Ledit paramètre *y* à estimer peut également être un paramètre consolidé. De même, les variables explicatives $x_i$($i$=1,..., $q$) regroupées dans la matrice $\mathrm{X} = \begin{bmatrix} x_1(1) & \cdots & x_q(1) \\ \vdots & \ddots & \vdots \\ x_1(N) & \cdots & x_q(N) \end{bmatrix}$ peuvent également être des variables consolidées.

On cherche à établir une relation linéaire entre le paramètre de vol et les variables explicatives, c'est-à-dire que l'on cherche un vecteur coefficient $b=[b_1...b_q]^T$ tel que

$$y = Xb + e$$

où *e,* un vecteur de *N* lignes, représente l'erreur de modèle appelée également erreur de reconstruction et l'exposant « ' » indique le transposé du vecteur.

L'estimation est réalisée sur la fenêtre d'observation $F_n$ et conduit à un vecteur coefficient estimé $b(n)$ = $[b_1(n)...b_q(n)]^\mathrm{T}$ minimisant la puissance de l'erreur sur la fenêtre d'observation et vérifiant:

$$y(n) = X(n)b(n) + e(n)$$

où $e(n) = [e(n)e(n\text{-}1)...e(n\text{-}N\text{+}1)]^T$

On notera que ce principe de modélisation peut s'appliquer, pour un même paramètre de vol, à chacun des capteurs fournissant des observations de ce paramètre.

Par ailleurs, avantageusement, dans un mode de réalisation particulier, on utilise une variable d'entrée supplémentaire dite d'ajustement permettant de prendre en compte des signaux non centrés, et plus généralement toute incertitude non modélisée, comme précisé ci-dessous.

La présente invention concerne également une première méthode de détection automatique d'au moins une panne affectant au moins un vecteur paramètre de vol utilisé par un système d'un aéronef, en particulier un système de commandes de vol électriques.

Selon l'invention, cette première méthode est remarquable en ce que l'on réalise, de façon automatique et répétitive, la suite d'étapes successives suivante :

A/ en mettant en oeuvre le procédé précité, on détermine, sur une fenêtre d'observation quelconque $F_{n+1}$ :

- une première estimation dite *a priori* dudit paramètre de vol, qui est calculée à l'aide de variables explicatives observées sur ladite fenêtre d'observation $F_{n+1}$ et d'un vecteur coefficient estimé sur la fenêtre d'observation précédente $F_n$ ; et
- une seconde estimation dite *a posteriori* dudit paramètre de vol, qui est calculée à l'aide de variables explicatives observées sur ladite fenêtre d'observation $F_{n+1}$ et d'un vecteur coefficient estimé également sur cette fenêtre d'observation $F_{n+1}$ ;

B/ on détermine une valeur observée dudit vecteur paramètre de vol sur ladite fenêtre d'observation $F_{n+1}$ ; et
C/ on réalise une comparaison entre lesdites première et seconde estimations et ladite valeur observée, permettant de détecter au moins une panne affectant ce vecteur paramètre de vol.

Avantageusement, à l'étape C/, on réalise la suite d'étapes successives suivante :

C1/ à l'aide d'une fonction de décision que l'on applique à ladite première estimation, à ladite seconde estimation et à la valeur observée dudit paramètre de vol, on calcule une valeur de décision ;
C2/ on compare cette valeur de décision à un seuil ; et
C3/ on détecte une panne lorsque ladite valeur de décision est supérieure audit seuil.

De plus, de façon avantageuse :

- on détermine ledit seuil à l'aide de probabilités de détection et de fausse alarme ; et
- à l'étape C3/, on détecte une panne lorsque ladite valeur de décision est supérieure audit seuil pendant une durée de confirmation.

La présente invention concerne en outre une seconde méthode de détection automatique du dysfonctionnement de capteurs de l'aéronef.
Selon l'invention, cette seconde méthode est remarquable en ce que :

A/ on détermine l'évolution des coefficients de la régression PLS, calculés à l'aide de variables explicatives et du paramètre observé, en mettant en oeuvre le procédé précité ; et
B/ on analyse l'évolution de ces coefficients de manière à pouvoir détecter un dysfonctionnement lors d'un changement d'évolution de ces coefficients.

Dans une première variante :

- à l'étape A/ précédente, on calcule, à l'aide des composants du vecteur coefficient, un critère qui est représentatif de l'évolution intra-vectorielle dudit vecteur coefficient ; et
- à l'étape B/, on compare ce critère à une valeur prédéterminée et on détecte un dysfonctionnement lorsque ce critère est supérieur à ladite valeur prédéterminée pendant une durée de confirmation.

En outre, dans une seconde variante :

- à l'étape A/, on calcule, à l'aide des vecteurs coefficients, un critère qui est représentatif de la statistique desdits coefficients ; et
- à l'étape B/, on compare ce critère à une valeur prédéterminée et on détecte un dysfonctionnement lorsque ce critère est inférieur à ladite valeur prédéterminée pendant une durée de confirmation.

La présente invention concerne également un dispositif d'estimation automatique, en temps réel, d'un vecteur paramètre de vol utilisé par un système d'un aéronef, en particulier un système de commandes de vol électriques.
Selon l'invention, ledit dispositif de détection est remarquable en ce qu'il comporte :

- des moyens pour recevoir les valeurs observées d'une pluralité de valeurs explicatives ;
- des moyens pour estimer, sur une fenêtre d'observation, un vecteur coefficient qui permet de déterminer une relation linéaire entre le vecteur paramètre de vol recherché et lesdites valeurs explicatives, qui est relative à une modélisation linéaire, en mettant en oeuvre une régression PLS ;
- des moyens pour utiliser ce vecteur coefficient estimé pour calculer, à l'aide de ladite modélisation linéaire, une valeur estimée dudit vecteur paramètre de vol ; et
- des moyens pour transmettre la valeur ainsi estimée à des moyens utilisateurs.

Un tel dispositif est avantageux car il ne nécessite pas l'installation de nouveaux capteurs ou de jauges spécifiques. De plus, il peut être embarqué dans un calculateur de vol et permet de fournir, en temps réel, avec une précision suffisante pour les applications concernées, des estimations de certains paramètres de vol.
La présente invention concerne en outre un premier ensemble de détection automatique d'une panne affectant au moins un vecteur paramètre de vol utilisé par un système d'un aéronef, en particulier un système de commandes de vol électriques. Cet ensemble de détection comporte :

- un dispositif tel que celui précité, pour déterminer :
  - une première estimation dite *a priori* dudit paramètre de vol; et
  - une seconde estimation dite *a posteriori* dudit paramètre de vol ;
- des moyens pour déterminer une valeur observée dudit vecteur paramètre de vol ; et
- des moyens pour réaliser une comparaison entre lesdites première et seconde estimations et ladite valeur observée, permettant de détecter une panne affectant ce vecteur paramètre de vol.

L'invention comprend par ailleurs un second ensemble de détection automatique du dysfonctionnement de capteurs de l'aéronef, comportant :

- un dispositif tel que celui précité, pour déterminer l'évolution des coefficients de la régression PLS, calculés à l'aide de variables explicatives et du paramètre observé ; et
- des moyens pour analyser l'évolution de ces coefficients de manière à pouvoir détecter un dysfonctionnement lors d'un changement d'évolution de ces coefficients.

La présente invention concerne également :

- un système d'aéronef, en particulier un système de commandes de vol électriques, qui comporte un dispositif et/ou un ensemble tels que ceux précités ; et
- un aéronef, en particulier un avion de transport, qui est pourvu d'un système, d'un dispositif et/ou d'un ensemble tels précités.

Les figures du dessin annexé feront bien comprendre comment l'invention peut être réalisée. Sur ces figures, des références identiques désignent des éléments semblables.

La figure 1 est le schéma synoptique d'un dispositif de détection conforme à l'invention, ainsi que de moyens utilisateurs.

La figure 2 illustre schématiquement un système de commandes de vol électriques d'un aéronef, comprenant un dispositif conforme à l'invention.

La figure 3 illustre schématiquement un algorithme de régression linéaire utilisé pour la mise en oeuvre de la présente invention.

La figure 4 est un graphique qui montre des courbes de type COR pour différentes fonctions de décision. Ces courbes COR (pour Caractéristiques Opérationnelles du Récepteur) représentent la probabilité de détection en fonction de la probabilité de fausse alarme.

La figure 5 est un schéma synoptique de moyens de détection de panne.

La figure 6 illustre schématiquement un algorithme de détection utilisé par une variante de réalisation particulière d'un ensemble de détection conforme à l'invention.

Le dispositif 1 conforme à l'invention et représenté schématiquement sur la figure 1 est destiné à estimer automatiquement, en temps réel, un vecteur paramètre de vol utilisé par un système d'un aéronef AC, en particulier par un système 20 de commandes de vol électriques.

Selon l'invention, ledit dispositif de détection 1 qui est embarqué sur l'aéronef AC, comporte :

- des moyens (liaison 3) pour recevoir les valeurs observées d'une pluralité de valeurs explicatives, d'un ensemble usuel 4 de sources d'informations précisées ci-dessous. Une valeur explicative représente un paramètre de vol (accélération, incidence,...) de l'aéronef AC, dont au moins une valeur est utilisée dans les traitements mis en oeuvre dans la présente invention ;
- des moyens 5 pour :
  - estimer, sur une fenêtre d'observation $F_n$ (précisée ci-après), un vecteur coefficient qui permet de déterminer une relation linéaire entre le vecteur paramètre de vol recherché et lesdites valeurs explicatives, qui est relative à une modélisation linéaire, et ceci en mettant en oeuvre une régression PLS (pour « Partial Least Squares » en anglais) ; et
  - utiliser ce vecteur coefficient estimé pour calculer, à l'aide de ladite modélisation linéaire, une valeur estimée dudit vecteur paramètre de vol ; et
- des moyens (liaison 6 pouvant se diviser en liaisons 6A, 6B, 6C) pour transmettre la valeur ainsi estimée à des moyens utilisateurs 7 et 8 précisés ci-dessous.

Ainsi, le dispositif 1 conforme à l'invention est en mesure d'estimer, en temps réel, de façon rapide, précise et à coût réduit, un vecteur paramètre de vol utilisé dans le contrôle de l'aéronef AC, et notamment dans l'élaboration des lois de pilotage.

De plus, le dispositif 1 comporte également des moyens de mesure (ensemble 4) pour mesurer sur l'aéronef AC les valeurs qui sont utilisées pour obtenir lesdites valeurs explicatives observées. Ces valeurs explicatives observées peuvent être des valeurs directement mesurées, ou des valeurs calculées à partir de mesures, ou bien des valeurs consolidées.

La mise en oeuvre de la présente invention, qui sera décrite en détail ci-dessous, ne nécessite pas l'installation de nouveaux capteurs ou de jauges spécifiques, le dispositif 1 pouvant utiliser un ensemble 4 de sources d'informations, déjà présentes sur l'aéronef AC. Elle peut notamment être mise en oeuvre dans un calculateur de vol et permet de fournir en temps réel, avec une précision suffisante pour les applications concernées, des estimations de certains paramètres de vol.

Un vecteur paramètre de vol comprend au moins une valeur dudit paramètre de vol. Ce vecteur paramètre de vol peut comporter une pluralité d'échantillons successifs de cette valeur (selon la fenêtre d'observation). Ce vecteur paramètre de vol peut également comprendre une pluralité de valeurs dudit paramètre de vol, issues d'une pluralité de sources d'informations (capteurs, moyens de consolidation) de l'aéronef. Dans ce cas, si on considère $N$ échantillons, il est défini sous forme d'une matrice. Ce vecteur paramètre de vol peut également comprendre une pluralité de paramètres de vol.

Dans un mode de réalisation préféré, les moyens 5 réalisent des traitements itératifs, précisés ci-dessous, en utilisant la régression PLS et des valeurs observées (c'est-à-dire mesurées ou éventuellement consolidées) dudit vecteur paramètre de vol. À cet effet, le dispositif 1 comporte également des moyens 10 de mesure ou de consolidation, qui sont reliés par une liaison 11 aux moyens 5, pour engendrer et fournir les valeurs observées dudit vecteur paramètre de vol, qui seront utilisées par lesdits moyens 5.

On notera que le vecteur paramètre de vol estimé conformément à la présente invention peut, notamment, être utilisé :

- en complément des valeurs mesurées ou calculées de ce paramètre de vol, en étant transmis à des moyens (calculateurs,...) non représentés, par l'intermédiaire de la liaison 6A ;
- par des moyens de détection de pannes 7, précisés ci-dessous, qui forment avec le dispositif 1 un ensemble 12 de détection de pannes, qui est susceptible d'indiquer une panne via une liaison 13 ; et/ou
- par des moyens de consolidation 8 pour prolonger la disponibilité du ou des paramètres de vol considérés.

De façon usuelle, les moyens de consolidation 8 font partie d'un ensemble 15 de consolidation qui comprend, de plus, des sources d'informations 16. Ces sources d'informations 16 sont reliées par une liaison 17 aux moyens 8 et fournissent des valeurs redondantes du paramètre de vol considéré. Les moyens de consolidation 8 utilisent la valeur estimée par le dispositif 1 et les valeurs reçues des sources d'informations 16 pour déterminer, de façon usuelle, une valeur consolidée du paramètre de vol, qui peut être transmise par une liaison 18.

Par ailleurs, dans un mode de réalisation préféré, le dispositif 1 fait partie d'un système 20 de commandes de vol électriques d'un aéronef AC, en particulier d'un avion de transport de vol, tel que représenté sur la figure 2. Bien que pour des raisons de clarté et de facilité de compréhension, le système 20 soit représenté à côté de l'aéronef AC sur la figure 2, il est bien entendu embarqué sur ce dernier.

De façon usuelle, ce système 20 de commandes de vol électriques comporte :

- au moins une gouverne (aileron, spoiler, gouverne de profondeur ou de direction) qui est mobile, et dont la position par rapport à l'aéronef AC est réglée par au moins un actionneur 21 ;
- ledit actionneur 21 qui règle la position de la gouverne, en fonction d'au moins un ordre d'actionnement reçu ;
- un ensemble 22 de capteurs ; et
- un calculateur de commandes de vol 23 qui élabore un ordre d'actionnement de la gouverne, qui est transmis audit actionneur 21, à partir d'un ordre de commande calculé par exemple à partir de l'action du pilote sur un manche de commande 24 ou d'une consigne de pilotage reçue d'un pilote automatique PA.

Ce calculateur de commandes de vol 23 peut comporter de façon générale :

- des moyens de consolidation 26 ;
- des moyens de calcul d'objectif de pilotage 27 ;
- des moyens de comparaison 28 ;
- des moyens de calcul d'ordres 29 ; et
- une boucle d'asservissement 30.

Le calculateur 23 acquiert une consigne de pilotage qui est donnée par la position des organes de commande en mode de pilotage manuel (à l'aide d'un manche 24 et d'un palonnier) ou par le pilote automatique PA en mode de pilotage automatique, et il la traduit en objectif de pilotage (moyens 27). Cet objectif de pilotage est ensuite comparé (moyens 28) à l'état réel de l'aéronef AC, qui est obtenu à l'aide de mesures réalisées par des capteurs 22 (anémométriques, clinométriques et inertiels) qui fournissent les valeurs courantes de paramètres de vol (tels que l'accélération, l'incidence,...). Le résultat est utilisé pour calculer, à l'aide de lois de pilotage (moyens 29), une consigne d'asservissement en position de gouvernes de l'aéronef. L'application d'une commande d'asservissement (moyens 30) sur un actionneur 21 lié à une gouverne permet d'ajuster cette dernière à la position voulue et ainsi d'influer sur la trajectoire de l'aéronef AC.

Le dispositif 1 peut être intégré dans le système 20 notamment de la manière représentée sur la figure 2. Dans ce cas, les moyens d'estimation 5 du dispositif 1 utilisent directement les valeurs reçues des capteurs 22 (ou éventuellement des moyens de consolidation 26) et ils transmettent les estimations réalisées aux moyens de consolidation 26 (ou éventuellement aux moyens de comparaison 28).

On décrit ci-après les estimations mises en oeuvre par les moyens 5, conformément à la présente invention.

L'invention prévoit donc d'estimer au moins un paramètre de vol $y$ à l'aide de $q$ paramètres de vol différents $(x_1,x_2,...,x_q)$, dits variables explicatives. On peut également formaliser le problème de la façon suivante : on considère un système à une sortie (le paramètre $y$ à estimer) et à $q$ entrées $(x_1,x_2,...,x_q)$, les variables explicatives. Les entrées et les sorties sont observées sur un horizon fini de $N$ échantillons (les calculateurs considérés étant de type numérique).

La fenêtre d'observation est notée $F_n = [n - N + 1, ....,n]$, $n$ étant l'instant d'échantillonnage courant.

On note :

- $y(n)=[y(n)y(n-1)...y(n-N+1)]^T$, le vecteur à $N$ lignes des échantillons du paramètre $y$ mesurés par l'un des capteurs sur la fenêtre d'observation, l'exposant « ' » indiquant le transposé du vecteur ; et
- $X(n) = [x_1(n)x_2(n)...x_q(n)]$ la matrice d'entrée à $N$ lignes et $q$ colonnes des échantillons des $q$ variables explicatives mesurées sur la fenêtre d'observation, avec $x_i(n) = [x_i(n)x_i(n - 1)....x_i(n - N + 1)]^T$ et $i = 1,...,q$.

On cherche à établir une relation linéaire entre le paramètre et les variables explicatives, c'est-à-dire on cherche le vecteur coefficient $b =[b_1...b_q]^T$ tel que :

$$y = Xb + e$$

où $e$, vecteur de $N$ lignes, représente l'erreur de modèle appelée également erreur de reconstruction.

L'estimation est réalisée sur la fenêtre d'observation $F_n$ et conduit à un vecteur coefficient estimé $b(n) = [b_1(n)...b_q(n)]^T$ minimisant la puissance de l'erreur sur la fenêtre d'observation et vérifiant l'équation Eq1 suivante :

$$y(n) = X(n)b(n) + e(n)$$

où $e(n) = [e(n)e(n-1)...e(n-N+1)]^T$

Il est important de remarquer que ce principe de modélisation peut s'appliquer, pour un même paramètre de vol, à chacun des capteurs fournissant des observations de ce paramètre ($y_i$ ($i$=1,...$s$) ou à une valeur consolidée $y_c$).

De plus, ce principe de modélisation linéaire entre les $q$ entrées observées sur une fenêtre de $N$ échantillons et la sortie $y$ représentant un paramètre de vol à estimer peut également se généraliser facilement au cas d'un vecteur paramètre de vol. Dans ce cas, on ne considère plus un vecteur $y$ , mais une matrice $Y$ constituée des $r$ paramètres de vol à estimer sur un horizon de $N$ échantillons :

$Y(n) = [y_1(n)y_2(n)..,y_r(n)]$ étant la matrice de paramètres à $N$ lignes et $r$ colonnes, avec $y_i(n)=[y_i(n)y_i(n-1)...y_i(n-N+1)]^T$ et $i$=1,...,$r$.

De même, dans l'équation *Eq1,* les coefficients du modèle linéaire sont regroupés, non plus dans un vecteur, mais dans une matrice à $q$ lignes et $r$ colonnes. Toutefois, sans perte de généralité, dans ce qui suit, on détaillera le cas d'une seule sortie pour simplifier les explications. La méthode se généralise facilement au cas à $r$ sorties.

La solution s'obtient via une méthode des moindres carrés qui va chercher à minimiser la puissance de l'erreur entre la sortie réelle $y$, et la sortie estimée $\hat{y} = Xb$.

On utilise la régression PLS (« Partial Least Squares » en anglais) qui est une alternative à la méthode usuelle des moindres carrés, et qui est peu coûteuse en ressources (puissance de calcul et mémoire au niveau des calculateurs).

En l'absence d'anomalie, le modèle suit l'évolution du paramètre de vol *y*. Ceci permet d'envisager la prédiction à court terme de ce paramètre à partir de la connaissance du modèle estimé. Les coefficients *b(n)* calculés par la régression PLS sur la fenêtre $F_n$, à l'aide des variables explicatives *X*(*n*) et du paramètre *y*(*n*) observés, permettent de prédire le paramètre sur la fenêtre $F_{n+1}$ selon :

$$\tilde{y}(n+1) = X(n+1)b(n) \ .$$

Cette prédiction $\tilde{y}(n+1)$ est une estimation *a priori* de *y*(*n*+1) calculée à partir de *b*(*n*). Cette estimation *a priori* peut être comparée à une estimation *a posteriori* calculée à partir de *b*(*n*+1) définie par :

$$\hat{y}(n+1) = X(n+1)b(n+1)$$

où *b*(*n*+1) représente le vecteur des coefficients calculés par la régression PLS sur la fenêtre $F_{n+1}$ à l'aide des variables explicatives *X*(*n*+1) et du paramètre *y*(*n*+1), observés. On obtient ainsi deux estimations de *y*(*n*+1).

Ces estimations *a priori* et *a posteriori* peuvent se rapporter à *y*(*n*+1), comme détaillé dans les expressions ci-dessus, mais peuvent également être étendues facilement à un horizon plus grand pour estimer *y*(*n*+*i*).

La détection de pannes (mise en oeuvre par les moyens 7) est basée sur la comparaison de ces deux estimations $\tilde{y}(n+1)$ et $\hat{y}(n+1)$ du paramètre observé *y*(*n*+1) (reçu des moyens 10 par exemple) et est expliquée ci-dessous.

On présente tout d'abord le principe de la régression PLS.

Pour simplifier les explications, les notations utilisées dans la suite omettent l'indication de l'instant courant *n :* ainsi *X*(*n*),*y*(*n*),*b*(*n*) seront notés *X , y et b.*

La régression PLS permet de résoudre le système suivant :

$$y = Xb + e$$

sans inversion matricielle explicite. Pour cela, on projette *y* et les colonnes de *X* dans un même espace de dimension $a \leq q$, le nombre de variables explicatives. Ainsi, on cherche la matrice *T* (*N* lignes, *a* colonnes, $a \leq q$), la *matrice V* (*q* lignes, *a* colonnes) et le vecteur *c* (*a* lignes) tels que :

$$\begin{Bmatrix} X = TV' + R_x \\ y = Tc + r_y \end{Bmatrix}$$

et tels que la matrice résidu $R_x$ et le vecteur résidu $r_y$ soient minima.

La régression PLS est un algorithme itératif permettant de réaliser ceci.

La première étape de la régression PLS consiste à calculer $t_1$ qui représente la première colonne de *T* selon :

$$t_1 = \frac{Xw_1}{w'_1 \, w_1}$$

avec $w_1$ vecteur à q lignes :

$$w_1 = \frac{X' y}{y' y}$$

On réalise ensuite la régression de *X* et de *y* sur cette première composante $t_1$ :

$$\begin{cases} X = t_1 v'_1 + R_{x1} \\ y = t_1 c_1 + r_{y1} \end{cases}$$

avec $v_1$ la première colonne de $V$ et $c_1$ la première composante du vecteur c. Le calcul de $v_k$ et $c_k$ est explicité dans l'algorigramme de la figure 3, quel que soit *k*. Si l'erreur de reconstruction est jugée trop importante, on calcule à partir des résidus $R_{x1}$ et $r_{y1}$ une nouvelle composante $t_2$ et on établit deux nouveaux modèles, à deux composantes :

$$\begin{cases} X = t_1 v_1' + t_2 v'_2 + R_{x2} \\ y = t_1 c_1 + t_2 c_2 + r_{y2} \end{cases}$$

expression dans laquelle $t_2$ *et* $v_2$ représentent respectivement les deuxièmes colonnes de $T$ et $V$ et $c_2$ la deuxième composante du vecteur *c.*

On répète la procédure en introduisant des nouvelles composantes et en établissant un nouveau modèle à *k* composantes jusqu'à ce que l'erreur de reconstruction soit acceptable par l'utilisateur. On notera $a \leq q$ le nombre final de composantes. Ainsi, l'estimation *a posteriori* $\hat{y}$ s'exprime simplement (conformément à l'équation *Eq2* suivante) :

$$\hat{y} = \sum_{k=1}^{a} c_k t_k$$

De plus, les coefficients *b* du modèle linéaire peuvent également être obtenus de manière itérative. À chaque itération d'indice *k,* la composante $t_k$ est définie à partir de $X_{k-1}$ par la relation :

$$t_k = \frac{X_{k-1} w_k}{w'_k \, w_k}$$

avec :

$X_0 = X$
$X_k = X_{k-1} - t_k v'_k$

Les composantes $t_k$ peuvent également s'exprimer en fonction de *X* (conformément à l'équation *Eq3* suivante) :

$$t_k = X w_k^*$$

où les vecteurs $w_k^*$ sont liés aux vecteurs $w_k$ par la relation :

$$w_1^* = w_1$$

$$w_k^* = \prod_{j=1}^{k-1} (I - w_j v_j') w_k$$

pour $k > 1$

Les $w_k^*$ peuvent se calculer par récurrence :

$$w_1^* = w_1$$

$$w_k^* = w_k - w_k^* v'_{k-1} w_k$$

Les équations *Eq*2 et *Eq*3 peuvent s'écrire :

$$\hat{y} = \sum_{k=1}^{a} c_k X w_k^* = X \sum_{k=1}^{a} c_k w_k^*$$

Ceci permet de donner l'expression des coefficients b:

$$b = \sum_{k=1}^{a} c_k w_k^*$$

Le principe de la régression PLS décrit ci-dessus est un algorithme itératif comme explicité dans l'algorigramme de la figure 3, dans lequel sont utilisées les notations suivantes :

$k$ Indice de l'itération en cours ;
$X_k$ Matrice d'entrée, $N$ lignes, $q$ colonnes à l'itération $k$ ;
$y_k$ Vecteur de sortie, $N$ lignes à l'itération $k$ ;
$b_k$ Vecteur des coefficients tels que $y_k = X_k b_k$ à l'itération $k$ ;
$a$ Nombre de composantes PLS retenues, inférieur ou égal à $q$ ;
$w_k$ Vecteur à $q$ lignes, coefficients de régression de $y_{k-1}$ dans la régression de la *j-ième* colonne de $X_{k-1}$ sur $y_{k-1}$ ;
$w_k^*$ Vecteur à $q$ lignes intervenant dans la mise à jour de $b$ ;
$t_k$ Vecteur à $N$ lignes, coefficients de régression de $w_k$ dans la régression de la *i-ème* ligne de $X_{k-1}$ sur $w_k$ ;
$v_k$ Vecteur à $q$ lignes, coefficients de régression de $t_k$ dans la régression de la *j-ième* colonne de $X_{k-1}$ sur $t_k$;
$c_k$ Coefficient de la régression de $y_{k-1}$ sur $t_k$ ; et
$\hat{y}$ Estimation de la régression PLS.

En outre, sur cette figure 3 :

- O1 correspond à « oui » et N1 à « non » ;
- A0 illustre le jeu de données entrées ;
- D indique le début de l'algorithme de la régression PLS ;
- AF indique la fin de cet algorithme ; et
- en L1, on normalise $w_k$ à 1.

Par ailleurs, concernant la stratégie de détection de pannes (mise en oeuvre par les moyens 7), elle est basée, à un instant $n$+1 donné, sur la comparaison des deux estimations *a priori* $\tilde{y}(n+1)$ et *a posteriori* $\hat{y}(n+1)$ et de la valeur observée $y(n+1)$.

On définit les deux hypothèses suivantes :

* $H_0$ : absence de dysfonctionnement ; et
* $H_1$ : présence de dysfonctionnement.

La décision entre ces deux hypothèses utilise une fonction $F$ des deux estimations et de la valeur observée, suivant la règle suivante : $F(\tilde{y}(n+1), \hat{y}(n+1), y(n+1)) \underset{H_0}{\overset{H_1}{><}} \lambda$

avec λ une valeur de seuil à définir. Si la fonction $F$, appelée statistique de test ou fonction de décision, est supérieure au seuil, alors l'hypothèse $H_1$ est vérifiée, c'est-à-dire un dysfonctionnement (ou panne) est détecté (par les moyens 7), comme représenté sur la figure 5 (avec 02 pour oui).

Si la fonction $F$ est inférieure au seuil, alors l'hypothèse $H_0$ est vérifiée, et les moyens 7 concluent à une absence de dysfonctionnement (ou panne), comme représenté sur la figure 5 (avec N2 pour non).

Le choix du seuil $\lambda$ est réalisé en fonction de probabilités de détection $(P_D)$ et de fausse alarme ($P_{FA}$).

De manière générale, il convient de fixer l'une des deux probabilités, par exemple $P_{FA}$, ce qui permet de calculer un seuil et d'en déduire l'autre probabilité $P_D$. On peut ainsi tracer une courbe COR (pour Caractéristique Opérationnelle de Réception) qui représente la probabilité de détection $P_D$ en fonction de la probabilité de fausse alarme $P_{FA}$ pour différentes valeurs de seuil. Cette courbe permet de caractériser la stratégie de détection et de comparer différentes fonctions possibles *F.*

Ainsi, comme l'illustre la figure 4, la fonction $F_1$ conduit à de meilleures performances que $F_2$. La fonction $F_3$ correspond à la solution la moins performante, tandis que la courbe en trait épais correspond à la solution idéale recherchée.

Le principe global de ce détecteur de dysfonctionnements (moyens 7) est représenté sur la figure 5.

À titre d'illustration (non limitative), plusieurs expressions de la fonction $F$ à appliquer peuvent être proposées.

À partir des estimations *a priori* et *a posteriori* définies précédemment, on calcule les erreurs d'estimation correspondantes :

$$\tilde{e}(n+1) = y(n+1) - \tilde{y}(n+1)$$

$$\hat{e}(n+1) = y(n+1) - \hat{y}(n+1)$$

La puissance $\tilde{P}$ de l'erreur *a priori* $\tilde{e}$ est supérieure à la puissance $\hat{P}$ de l'erreur *a posteriori ê,* puisque cette dernière est calculée de façon à être minimale.

Une première fonction de décision, qui peut être proposée, prend en compte uniquement l'estimation *a priori* $\tilde{y}$ et la valeur observée $y$ :

$$F_1(\tilde{y}, y) = \tilde{P}$$

Toutefois, il peut être intéressant de comparer cette estimation a *priori* et l'estimation *a posteriori.* Deux autres fonctions peuvent ainsi être proposées :

$$F_2(\tilde{y}, \hat{y}, y) = \hat{P} - \tilde{P}$$

$$F_3(\tilde{y}, \hat{y}, y) = \breve{P}$$

$\bar{P}$ représentant la puissance de la différence entre les estimations *a priori* et *a posteriori :*

$$\breve{e}(n+1) = \hat{y}(n+1) - \tilde{y}(n+1).$$

Par ailleurs, on notera que les paramètres d'entrée peuvent prendre ponctuellement des valeurs aberrantes (par exemple en raison d'un problème de transmission au niveau du bus de données), conduisant par une régression PLS à des estimations *a priori* et/ou *a posteriori* incohérentes. La stratégie de détection précitée est basée sur un seuillage de la valeur instantanée de la puissance de l'erreur et peut donc conduire dans ce cas précis à de fausses alarmes.

La mise en place d'une stratégie de confirmation permet de rendre la détection plus robuste.

Pour ce faire, la fonction de décision est étendue aux instants [($n$ + 1),($n$ + 2),...,(n + $T_{conf}$)] qui constituent la fenêtre de confirmation. Ainsi, si la fonction de décision dépasse le seuil fixé pendant un pourcentage (prédéterminé) du temps de confirmation $T_{conf}$ (également prédéterminé), le dysfonctionnement est confirmé.

Par ailleurs, dans le cadre de la présente invention, la régression PLS peut être étendue à des signaux non centrés.

On sait que, dans le cas de moindres carrés usuels, on cherche à résoudre le système suivant :

$$\hat{y} = Xb.$$

Si $X$ est centrée, $\hat{y}$ l'est aussi. Or, $\hat{y}$ représente une estimation de $y$ qui devrait donc aussi être centrée. Il s'agit d'une condition nécessaire pour obtenir une relation linéaire.

Ainsi, si on centre *X et y* avant d'effectuer la résolution des moindres carrés, ou éventuellement par la régression PLS, on a l'équation *Eq*4 suivante :

$$\hat{y} - m_y.1_{\{N*1\}} = (X - M_x)b$$

avec $1_{\{N*1\}}$ un vecteur unitaire de N lignes et $M_x$ une matrice $N$ lignes, $q$ colonnes telle que :

$$M_x = \begin{pmatrix} m_{x1} & \cdots & m_{xq} \\ \vdots & \ddots & \vdots \\ m_{x1} & \cdots & m_{xq} \end{pmatrix}$$

$m_y$ et $m_{xi}$ correspondent aux moyennes de $y$ et de la *i-ème* colonne de $X$.

L'équation *Eq*4 devient l'équation *Eq*5 suivante :

$$\hat{y} = \begin{pmatrix} x_1(n) - m_{x1} & \cdots & x_q(n) - m_{xq} & 1 \\ \vdots & \ddots & \vdots & \vdots \\ x_1(n-N+1) - m_{x1} & \ldots & x_q(n-N+1) - m_{x_q} & 1 \end{pmatrix} \begin{pmatrix} b_1 \\ \vdots \\ b_q \\ m_y \end{pmatrix}$$

Le centrage des entrées et de la sortie est nécessaire pour la bonne résolution du système. Cependant, dans le cas présent :

- centrer $y$ éliminerait certaines pannes, notamment les pannes de type biais qui se manifestent par un saut de moyenne ; et
- centrer $X$ pourrait conduire à de fausses alarmes. En effet, un saut de moyenne (naturel) sur les variables d'entrée peut conduire à un saut de moyenne sur la sortie, qui serait donc considéré comme un fonctionnement normal. Le fait de centrer les entrées mènerait à considérer le saut de la sortie comme un dysfonctionnement, et provoquerait donc une fausse alarme.

Pour remédier à ce problème, de façon avantageuse, on ajoute une variable d'entrée dite d'ajustement. En effet, l'équation *Eq5* peut également s'écrire :

$$\hat{y} = \begin{pmatrix} x_1(n) & \cdots & x_q(n) & 1 \\ \vdots & \ddots & \vdots & \vdots \\ x_1(n-N+1) & \ldots & x_q(n-N+1) & 1 \end{pmatrix} \begin{pmatrix} b_1 \\ \vdots \\ b_q \\ m_y - \sum_{k=1}^{q} b_k m_{x_k} \end{pmatrix}$$

On recherche un modèle linéaire entre $y$ et $X$ sans les centrer au préalable, mais en introduisant une variable d'entrée supplémentaire. Le modèle recherché s'écrit :

$$\hat{y} = \begin{pmatrix} x_1(n) & \cdots & x_q(n) & 1 \\ \vdots & \ddots & \vdots & \vdots \\ x_1(n-N+1) & \cdots & x_q(n-N+1) & 1 \end{pmatrix} \begin{pmatrix} b_1^+(n) \\ \vdots \\ b_q^+(n) \\ b_{q+1}^+(n) \end{pmatrix}$$

avec $b^+(n) = \left[b_1^+(n) \ldots b_{q+1}^+(n)\right]'$ un vecteur de $q$ +1 lignes. Il constitue une version augmentée du vecteur $b$ par ajout d'une composante. Cette composante représente :

$$m_y - \sum_{k=1}^{q} b_k m_{x_k}$$

avec l'hypothèse d'une relation linéaire entre $X$ *et* $y$. Dans les autres cas, cette composante permet de compenser les différences de moyennes entre $y$ et $Xb$.

L'ajout de la variable d'ajustement permet de rechercher la fonction minimisant l'erreur dans l'ensemble des fonctions affines plutôt que dans celui des fonctions linéaires. L'ensemble, dans lequel la fonction est recherchée, est plus grand et permet donc de trouver une fonction qui donnera une erreur de reconstruction inférieure ou égale.

En effet, on peut comparer les deux approches, avec et sans variable d'ajustement :

A/ sans la variable d'ajustement, on cherche $g_1$ telle que :

$$y = g_1(X) + e_1$$

avec $g_1$ :

$$\Re^N \times \Re^q \rightarrow \Re^N, b \in \Re^q$$

$$X \rightarrow Xb$$

Soit $G_1$ l'ensemble des fonctions $g_1$ ; et

B/ avec la variable d'ajustement, on cherche $g_2$ telle que :

$$y = g_2(X) + e_2$$

avec $g_2$ :

$$\begin{matrix} \Re^N \times \Re^q \rightarrow \Re^N \\ X \rightarrow Xb + b_{q+1}^+ . 1_{\{N*1\}} \end{matrix}, b \in \Re^q \ et b_{q+1}^+ \in \Re.$$

Soit $G_2$ l'ensemble des fonctions $g_2$.

On veut minimiser l'erreur de reconstruction $e$, c'est-à-dire on cherche $\hat{g}_1 \in G_1$ et $\hat{g}_2 \in G_2$ telles que :

$$\hat{g}_1 = \arg_{g_1} \min \left| y - g_1(X) \right|^2 = \arg_{g_1} \min \left| e_1 \right|^2$$

et

$$\hat{g}_2 = \arg_{g_2} \min\left|y - g_2(X)^2\right| = \arg_{g_2} \min\left|e_2\right|^2$$

Les fonctions $\hat{g}_1$ et $\hat{g}_2$ possèdent *q* variables d'entrée et une variable de sortie.

Si l'erreur minimale est obtenue via $g_1$ alors $g_2$ fixera le coefficient $b_{q+1}^{+}$ à 0. Dans ce cas, $G_1$ est bien inclus dans $G_2$.

Sinon, $g_2$ va permettre la minimisation de l'erreur en proposant une solution affine plutôt que linéaire, et dans ce cas $G_1$ est toujours inclus dans $G_2$.

Donc $G_1$ est inclus dans $G_2$, ce qui implique :

$$\arg_{g_2} \min\left|e_2\right|^2 \leq \arg_{g_1} \min\left|e_1\right|^2$$

De ce fait, $\hat{g}_2$ conduit soit à la même erreur *e* que $\hat{g}_1$ soit à une erreur plus faible.

En définitive, l'ajout de la variable d'ajustement conduit donc nécessairement à une erreur de reconstruction plus faible (ou au plus égale).

Le dispositif 1 conforme à l'invention peut également être appliqué à un autre ensemble de détection (non représenté), permettant de détecter automatiquement le dysfonctionnement de capteurs de l'aéronef.

Cet ensemble de détection automatique comporte, en plus dudit dispositif 1 (utilisé pour déterminer l'évolution des coefficients de la régression PLS, calculés à l'aide de variables explicatives et du paramètre observé), des moyens (non représentés) pour analyser l'évolution de ces coefficients de manière à pouvoir détecter un dysfonctionnement lors d'un changement d'évolution de ces coefficients.

On sait que les coefficients $\left\lfloor b_1^+ \ldots b_q^+ b_{q+1}^+ \right\rfloor$, coefficients associés aux *q* entrées $(x_1, x_2, ..., x_q)$ et à la variable d'ajustement, présentent un changement de comportement lorsqu'un dysfonctionnement se produit. Il est possible d'utiliser ce changement dans le but de détecter le dysfonctionnement.

Deux approches sont prévues : une (première) analyse de l'évolution intra-vectorielle de $b^+ = \left\lfloor b_1^+ \ldots b_q^+ b_{q+1}^+ \right\rfloor$ et une (seconde) analyse de l'évolution de la statistique des coefficients $b^+$ au cours du temps. Dans la suite, $b^+(n) = \left\lfloor b_1^+(n) \ldots b_{q+1}^+(n) \right\rfloor$ désigne le vecteur $b^+$ calculé à l'instant *n*.

La stratégie de détection (relative à l'analyse de l'évolution intra-vectorielle) consiste à effectuer le suivi de la dispersion des coefficients issus de la régression PLS. Cela revient à évaluer à chaque échantillon une distance entre les composantes du vecteur coefficient $b^+$. Une analyse particulière issue de cette stratégie est détaillée ci-après.

La dispersion du vecteur est mesurée par sa puissance qui permet de prendre en compte simultanément des changements abrupts de moyenne et de variance (*Eq*6) :

$$C_1(n) = \frac{1}{q+1} \sum_{i=1}^{q+1} b_1^{+2}(n) = \frac{\left\| b^+ \right\|^2}{q+1}.$$

D'autres critères sont également envisageables, tels que les critères de la moyenne $\frac{1}{q+1} \sum_{i=1}^{q+1} b_i^+(n)$ ou la variance $\frac{1}{q+1} \sum_{i=1}^{q+1} \left( b_i^+(n) - \frac{1}{q+1} \sum_{j=1}^{q+1} b_j^+(n) \right)^2$ mais ils ne prennent en compte qu'une partie de l'information portée par les coefficients. Aussi, dans un souci de clarté, on présente uniquement les résultats associés au critère *Eq6.*

La règle du test est la suivante :

$$C_1(n) \underset{H_0}{\overset{H_1}{\gtrless}} seuil,$$

$H_0$ représente l'hypothèse de fonctionnement normal et $H_1$ l'hypothèse de présence de panne. On regarde si ledit critère est supérieur à au moins un seuil, et ce pendant au moins un certain temps de confirmation

Par ailleurs, la seconde stratégie de détection consiste à analyser un changement dans la statistique des coefficients $b^+$. En effet, on peut faire l'hypothèse qu'en absence de panne (hypothèse $H_0$), le vecteur $\lfloor b_1^+ \ldots b_q^+ b_{q+1}^+ \rfloor$ suit une loi $p_{H0}(b^+)$ dont les paramètres peuvent être estimés. Par contre, en présence d'une panne (hypothèse $H_1$), le vecteur suit une lois différente $p_{H_1}(b^+)$ dépendant du type de panne et de ses caractéristiques.

Comme on souhaite une stratégie de détection qui soit adaptée à tout type de panne, on ne cherche pas à caractériser les différentes lois possibles sous $H_1$, d'autant plus qu'il n'est pas certain que l'ensemble des pannes à détecter soit entièrement défini. Ainsi, le problème de détection se ramène au test d'hypothèses suivantes :

$H_0$ : $b^+$ suit $p_{H0}$ $H_1$ : $b^+$ ne suit pas $p_{H0}$

En supposant que les lois sous $H_0$ et $H_1$ sont suffisamment éloignées, une règle de test peut être la suivante ($Eq7$) :

$$p_{H_0}(b^+) \underset{H_1}{\overset{H_0}{\gtrless}} seuil_1$$

ou de manière équivalente en utilisant la log-vraisemblance ($Eq8$) :

$$\sum_{i=1}^{q+1} \ln\left(p_{H_0}^{(i)}\left(b_i^+\right)\right) \underset{H_1}{\overset{H_0}{\gtrless}} seuil_2$$

Toute autre fonction $C_2(p_{H0}(b^+))$ de $p_{H0}(b^+)$ peut être utilisée.

On regarde si le critère est inférieur ou supérieur à au moins un seuil pendant au moins un certain temps de confirmation. Le seuil doit être choisi en fonction des probabilités de fausse alarme et de non détection souhaitées.

Dans la mesure où l'hypothèse $H_1$ n'est pas entièrement spécifiée ($p_{H1}$ non connue), seule la probabilité de fausse alarme peut être fixée, déterminant ainsi le seuil du test :

$$P_{FA} = \iint_{D_1} p_{H_0}\left(b^+\right),$$

où $D_1$ correspond à la partie de $\Re^{q+1}$ satisfaisant $H_1$ dans $Eq7$, c'est-à-dire l'ensemble des composantes de $b^+$ telles que $p_{H_0}(b^+) < seuil_1$.

Ainsi, le calcul de la $P_{FA}$ et du seuil se fait sur la queue de la distribution $p_{H_0}$.

Afin de déterminer le type de loi suivie par le vecteur $b^+$ sous $H_0$, on suppose que les différentes composantes sont indépendantes :

$$p_{H_0}(b^+) = \prod_{i=1}^{q+1} p_{H_0}^{(i)}(b_i^+),$$

avec $p_{H_0}^{(i)}$ les lois marginales des différentes composantes.

Les différentes lois marginales sont choisies parmi les lois connues (ou assemblage de lois connues) de manière à être le plus proche possible de l'histogramme des coefficients issus de la régression PLS.

En général, les lois connues qui peuvent approximer la statistique de $b^+$ sont fonctions de deux paramètres, moyenne et variance. Le principe reste toutefois le même pour des lois plus complexes et plus générales à trois paramètres, et l'algorithme de détection doit être adapté en conséquence.

L'algorithme de détection est présenté par l'algorigramme (représentation schématique du processus implantable en temps réel) de la figure 6 en cinq étapes (E1 à E5) décrites ci-après.

Sur cette figure 6 :

- 01 correspond à « oui » et N1 à « non » ;
- D indique le début de l'algorithme de détection ;
- AF indique la fin de cet algorithme ;
- DET correspond à la détection ;
- conv correspond au temps de convergence de la moyenne calculée ;
- $fin_{ech}$ correspond au dernier point de l'échantillon ;
- crit correspond au critère de la stratégie utilisée pour la détection ; et
- seuil correspond au seuil de détection.

Dans un premier temps (étape E1), on initialise les paramètres servant au calcul du critère de détection, à savoir la moyenne et l'écart type de chaque composante du vecteur $b^+(n)$ de la PLS.

On tient compte des éléments suivants :

$n$=0

$$m_n^{(i)} = 0$$

$$m2_n^{(i)} = 1 \qquad , \; i = 1,\ldots,q+1.$$

$$\sigma_n^{(i)} = \sqrt{m2_n^{(i)} - m_n^{(i)^2}}$$

Ainsi, $m_n$ = 0 où $m_n$ est un vecteur à $q$+1 lignes des moyennes de chaque composante du vecteur $b^+$ à l'instant $n : m_n = \left(m_n^{(1)} \ldots m_n^{(q+1)}\right)^T$.

$m2_n = (1...1)^T$ est un vecteur à $q$ +1 lignes intermédiaires, permettant le calcul de l'écart type.

$\sigma_n\ (1...1)^T$ est un vecteur à $q$+1 lignes des écarts types de chaque composante du vecteur $b^+$ à l'instant

$$k : \sigma_n = \left(\sqrt{m2_n^{(1)} - (m_n^{(1)})^2} \ldots \sqrt{m2_n^{(q)} - \left(m_n^{(q)}\right)^2}\right)^T$$

A l'étape E2, l'instant $n$ est considéré.

A l'étape E3, on calcule le vecteur $b^+(n)$ à $q$+1 lignes des coefficients issus de la régression PLS à l'instant $n$.

A l'étape E4, on met à jour les nouvelles valeurs des paramètres de la loi de probabilité. Dans l'exemple considéré, il s'agit d'une moyenne pondérée. De manière générale, cette mise à jour est faite à chaque instant de la façon suivante ($Eq$9) :

$$m_n = m_{n-1}\lambda_1 + b_n^+(1-\lambda_1)$$

avec $0 \leq \lambda_1 \leq 1$.

Toutefois, au tout début, après l'initialisation, cette mise à jour ne peut pas être considérée comme valable et utilisable pour la détection tant que la valeur n'a pas convergé de manière suffisante. En pratique, on considère la valeur de moyenne calculée par *Eq*9 valable lorsque la moyenne calculée a atteint au moins 90% de la valeur souhaitée. Afin de pouvoir calculer le temps de convergence nécessaire, on fait l'hypothèse que durant le temps de convergence les $b^+(n)$ sont constants. L'équation *Eq*9 devient :

$$m_n = m_0\lambda_1^n + (1-\lambda_1)\sum_{j=0}^{n-1} b^+(n-j)\lambda_1^j \approx m_0\lambda_1^n + b^+(n)\sum_{j=0}^{n-1}(1-\lambda)\lambda_1^j \ .$$

Dans le présent cas, $m_0 = 0$. Donc, trouver le temps de convergence revient à déterminer la valeur minimale de $n$ pour laquelle $\sum_{j=0}^{n-1}(1-\lambda)\lambda_1^j$ dépasse 90%. On réalise une initialisation avant de commencer la détection de dysfonctionnement et de passer à l'étape E5.

A l'étape E5, on tient compte des éléments suivants :

$$m_n^{(i)} = m_{n-1}^{(i)} \times \lambda_1 + b^{+(i)}(n)(1-\lambda_1)$$

$$m2_n^{(i)} = m2_{n-1}^{(i)} \times \lambda_1 + b^{+(i)^2}(n)(1-\lambda_1), \ i = 1,\ldots,q+1 .$$

$$\sigma_n^{(i)} = \sqrt{m2_n^{(i)} - m_n^{(i)^2}}$$

A l'étape E5, on calcule le critère de détection, par exemple celui défini par *Eq*8.

Afin d'éviter des fausses alarmes liées à des valeurs aberrantes, la moyenne de ce critère est réalisée sur un certain nombre de points de confirmation $n_{conf}$. Suite au passage au logarithme, cette moyenne est approximée par le maximum sur le temps de confirmation.

La règle énoncée dans *Eq7* permet de décider s'il y a ou non détection (mise en évidence par DET sur la figure 6).

## Revendications

1. Procédé d'estimation automatique d'un vecteur paramètre de vol utilisé par un système (20) d'un aéronef (AC), en particulier un système de commandes de vol électriques,
**caractérisé en ce que** l'on réalise, de façon automatique, la suite d'étapes successives suivante :

    a) on reçoit les valeurs observées d'une pluralité de valeurs explicatives, une valeur explicative représentant un paramètre de l'aéronef (AC) qui est utilisé dans les traitements suivants ;
    b) on estime, sur une fenêtre d'observation, un vecteur coefficient qui permet de déterminer une relation linéaire entre le vecteur paramètre de vol recherché et lesdites valeurs explicatives, qui est relative à une modélisation linéaire, en mettant en oeuvre une régression PLS ;
    c) on utilise ce vecteur coefficient estimé qui minimise la puissance de l'erreur de modèle sur la fenêtre d'observation, pour calculer, à l'aide de ladite modélisation linéaire, une valeur estimée dudit vecteur paramètre de vol ; et
    d) on transmet la valeur ainsi estimée à des moyens utilisateurs (7, 8).

2. Procédé selon la revendication 1,
**caractérisé en ce qu'**un vecteur paramètre de vol comprend au moins une valeur dudit paramètre de vol et au moins un paramètre de vol.

**3.** Procédé selon l'une des revendications 1 et 2,
**caractérisé en ce que** ladite fenêtre d'observation est définie pour une pluralité d'échantillons successifs.

**4.** Procédé selon l'une des revendications 1 à 3,
**caractérisé en ce que** l'on réalise les opérations b) et c) de façon itérative, en utilisant la régression PLS et des valeurs observées dudit vecteur paramètre de vol.

**5.** Procédé selon l'une quelconque des revendications précédentes, **caractérisé en ce que** l'on utilise, de plus, une variable d'entrée supplémentaire d'ajustement permettant de prendre en compte des signaux non centrés et toute incertitude non modélisée.

**6.** Méthode de détection automatique d'une panne affectant au moins un vecteur paramètre de vol utilisé par un système (20) d'un aéronef (AC), en particulier un système de commandes de vol électriques, **caractérisée en ce que** l'on réalise, de façon automatique et répétitive, la suite d'étapes successives suivante :

A/ en mettant en oeuvre le procédé spécifié sous l'une quelconque des revendications 1 à 5, on détermine, sur une fenêtre d'observation quelconque $F_{n+1}$ :

- une première estimation dite *a priori* dudit paramètre de vol, qui est calculée à l'aide de variables explicatives observées sur ladite fenêtre d'observation $F_{n+1}$ et d'un vecteur coefficient estimé sur la fenêtre d'observation précédente $F_n$ précédente ; et
- une seconde estimation dite *a posteriori* dudit paramètre de vol, qui est calculée à l'aide de variables explicatives observées sur ladite fenêtre d'observation $F_{n+1}$ et d'un vecteur coefficient estimé également sur cette fenêtre d'observation $F_{n+1}$ ;

B/ on détermine une valeur observée dudit vecteur paramètre de vol sur ladite fenêtre d'observation $F_{n+1}$ ; et
C/ on réalise une comparaison entre lesdites première et seconde estimations et ladite valeur observée, permettant de détecter une panne affectant ce vecteur paramètre de vol.

**7.** Méthode selon la revendication 6,
**caractérisée en ce qu'**à l'étape C/, on réalise la suite d'étapes successives suivante :

C1/ à l'aide d'une fonction de décision que l'on applique à ladite première estimation, à ladite seconde estimation et à la valeur observée dudit paramètre de vol, on calcule une valeur de décision ;
C2/ on compare cette valeur de décision à un seuil ; et
C3/ on détecte une panne lorsque ladite valeur de décision est supérieure audit seuil.

**8.** Méthode selon l'une des revendications 6 et 7,
**caractérisée en ce que** l'on détermine ledit seuil à l'aide de probabilités de détection et de fausse alarme.

**9.** Méthode selon l'une des revendications 6 à 8,
**caractérisée en ce qu'**à l'étape C3/, on détecte une panne lorsque ladite valeur de décision est supérieure audit seuil pendant une durée de confirmation.

**10.** Méthode de détection automatique du dysfonctionnement de capteurs d'un aéronef,
**caractérisée en ce que** :

A/ on détermine l'évolution des coefficients de la régression PLS, calculés à l'aide de variables explicatives et du paramètre observé, en mettant en oeuvre le procédé spécifié sous l'une quelconque des revendications 1 à 5 ; et
B/ on analyse l'évolution de ces coefficients de manière à pouvoir détecter un dysfonctionnement lors d'un changement d'évolution de ces coefficients.

**11.** Méthode selon la revendication 10,
**caractérisée en ce que** :

- à l'étape A/, on calcule, à l'aide des composants du vecteur coefficient, un critère qui est représentatif de l'évolution intra-vectorielle dudit vecteur coefficient ; et

- à l'étape B/, on compare ce critère à une valeur prédéterminée et on détecte un dysfonctionnement lorsque ce critère est inférieur à ladite valeur prédéterminée pendant une durée de confirmation.

**12.** Méthode selon la revendication 10, **caractérisée en ce que** :

- à l'étape A/, on calcule, à l'aide des vecteurs coefficients, un critère qui est représentatif de la statistique desdits coefficients ; et
- à l'étape B/, on compare ce critère à une valeur prédéterminée et on détecte un dysfonctionnement lorsque ce critère est supérieur à ladite valeur prédéterminée pendant une durée de confirmation.

**13.** Dispositif d'estimation automatique d'un vecteur paramètre de vol utilisé par un système (20) d'un aéronef (AC), en particulier un système de commandes de vol électriques, **caractérisé en ce qu'**il comporte :

- des moyens (3) pour recevoir les valeurs observées d'une pluralité de valeurs explicatives, une valeur explicative représentant un paramètre de l'aéronef (AC) qui est utilisé dans les traitements suivants ;
- des moyens (5) pour estimer, sur une fenêtre d'observation, un vecteur coefficient qui permet de déterminer une relation linéaire entre le vecteur paramètre de vol recherché et lesdites valeurs explicatives, qui est relative à une modélisation linéaire, en mettant en oeuvre une régression PLS ;
- des moyens (5) pour utiliser ce vecteur coefficient estimé qui minimise la puissance de l'erreur de modèle sur la fenêtre d'observation, pour calculer, à l'aide de ladite modélisation linéaire, une valeur estimée dudit vecteur paramètre de vol ; et
- des moyens (6A, 6B, 6C) pour transmettre la valeur ainsi estimée à des moyens utilisateurs (7, 8).

**14.** Dispositif selon la revendication 13, **caractérisé en ce qu'**il comporte, de plus, des moyens de mesure (4, 10) pour mesurer sur l'aéronef (AC) des valeurs qui sont utilisées pour obtenir lesdites valeurs observées.

**15.** Ensemble de détection automatique d'une panne affectant au moins un vecteur paramètre de vol utilisé par un système (20) d'un aéronef (AC), en particulier un système de commandes de vol électriques, **caractérisé en ce qu'**il comporte :

- un dispositif (1) tel que celui spécifié sous l'une des revendications 10 et 11, pour déterminer, sur une fenêtre d'observation quelconque $F_{n+1}$ :

  • une première estimation dite *a priori* dudit paramètre de vol, qui est calculée à l'aide de variables explicatives observées sur ladite fenêtre d'observation $F_{n+1}$ et d'un vecteur coefficient estimé sur la fenêtre d'observation précédente $F_n$ ; et
  • une seconde estimation dite *a posteriori* dudit paramètre de vol, qui est calculée à l'aide de variables explicatives observées sur ladite fenêtre d'observation $F_{n+1}$ et d'un vecteur coefficient estimé également sur cette fenêtre d'observation $F_{n+1}$ ;

- des moyens (10) pour déterminer une valeur observée dudit vecteur paramètre de vol sur ladite fenêtre d'observation $F_{n+1}$ ; et
- des moyens (7) pour réaliser une comparaison entre lesdites première et seconde estimations et ladite valeur observée, permettant de détecter une panne affectant ce vecteur paramètre de vol.

**16.** Ensemble de détection automatique du dysfonctionnement de capteurs d'un aéronef, **caractérisé en ce qu'**il comporte :

- un dispositif (1) tel que celui spécifié sous l'une des revendications 13 et 14, pour déterminer l'évolution des coefficients de la régression PLS, calculés à l'aide de variables explicatives et du paramètre observé ; et
- des moyens pour analyser l'évolution de ces coefficients de manière à pouvoir détecter un dysfonctionnement lors d'un changement d'évolution de ces coefficients.

**17.** Système d'aéronef, en particulier un système de commandes de vol électriques, **caractérisé en ce qu'**il comporte un dispositif (**1**) tel que celui spécifié sous l'une des revendications **13** et **14**.

**18.** Système d'aéronef, en particulier un système de commandes de vol électriques, **caractérisé en ce qu'**il comporte un ensemble de détection (**12**) tel que celui spécifié sous l'une des revendications **15** et **16**.

## Patentansprüche

**1.** Verfahren zum automatischen Schätzen eines Flugparametervektors, der durch ein System (20) eines Flugzeugs (AC) verwendet wird, insbesondere ein System elektrischer Flugsteuerungen, **dadurch gekennzeichnet, dass** automatisch die folgende Abfolge aufeinanderfolgender Schritte realisiert wird:

a) Empfangen der beobachteten Werte von einer Vielzahl von explikativen Werten, wobei ein explikativer Wert einen Parameter des Flugzeugs (AC) darstellt, der in den folgenden Verarbeitungen verwendet wird:
b) in einem Beobachtungsfenster Schätzen eines Koeffizientenvektors, der die Bestimmung einer linearen Beziehung zwischen dem gewünschten Flugparametervektor und den explikativen Werten ermöglicht, die sich auf eine lineare Modellierung bezieht, wobei eine PLS-Regression durchgeführt wird;
c) Verwenden dieses geschätzten Koeffizientenvektors, der die Stärke des Modellfehlers in dem Beobachtungsfenster minimiert, um mit Hilfe der linearen Modellierung einen geschätzten Wert des Flugparametervektors zu berechnen; und
d) Übertragen des so geschätzten Wertes an Benutzermittel (7, 8).

**2.** Verfahren nach Anspruch 1 **dadurch gekennzeichnet, dass** ein Flugparametervektor mindestens einen Wert des Flugparameters und mindestens einen Flugparameter umfasst.

**3.** Verfahren nach einem der Ansprüche 1 und 2, **dadurch gekennzeichnet, dass** das Beobachtungsfenster durch eine Vielzahl von aufeinanderfolgenden Prüfkörpern definiert ist.

**4.** Verfahren nach einem der Ansprüche 1 bis 3, **dadurch gekennzeichnet, dass** die Schritte b) und c) wiederholt ausgeführt werden, wobei die PLS-Regression und beobachtete Werte des Flugparametervektors verwendet werden.

**5.** Verfahren nach einem der vorhergehenden Ansprüche, **dadurch gekennzeichnet, dass** des Weiteren eine zusätzliche
Anpassungseingangsvariable verwendet wird, welche die Berücksichtigung der nicht zentrierten Signale und jeder nicht modellierten Unsicherheit ermöglicht.

**6.** Verfahren zum automatischen Detektieren einer Störung, die mindestens einen Flugparametervektor betrifft, der durch ein System (20) eines Flugzeugs (AC) verwendet wird, insbesondere ein System elektrischer Flugsteuerungen, **dadurch gekennzeichnet, dass** automatisch und wiederholt die folgende Abfolge aufeinanderfolgender Schritte realisiert wird:

A Bestimmen durch Durchführung des Verfahrens nach einem der Ansprüche 1 bis 5 in einem beliebigen Beobachtungsfenster $F_{n+1}$:

- einer *A-priori* genannten ersten Schätzung des Flugparameters, die mit Hilfe von explikativen Variablen berechnet wird, die in dem Beobachtungsfenster $F_{n+1}$ beobachtet werden, und eines Koeffizientenvektors, der in dem vorherigen Beobachtungsfenster $F_n$ geschätzt wurde; und
- einer A-posteriori genannten zweiten Schätzung des Flugparameters, die mit Hilfe von explikativen Variablen berechnet wird, die in dem Beobachtungsfenster $F_{n+1}$ beobachtet werden, und eines Koeffizientenvektors, der auch in diesem Beobachtungsfenster $F_{n+1}$ geschätzt wurde;

B Bestimmen eines beobachteten Wertes des Flugparametervektors in dem Beobachtungsfenster $F_{n+1}$; und
C Durchführen eines Vergleichs zwischen der ersten und zweiten Schätzung und dem beobachteten Wert, der das Detektieren einer Störung ermöglicht, die diesen Flugparametervektor betrifft.

**7.** Verfahren nach Anspruch 6,

**dadurch gekennzeichnet, dass** in Schritt C die folgende Abfolge aufeinanderfolgender Schritte realisiert wird:

C1 Berechnen eines Entscheidungswertes mit Hilfe einer Entscheidungsfunktion, die auf die erste Schätzung, auf die zweite Schätzung und auf den beobachteten Wert des Flugparameters angewendet wird;
C2 Vergleichen dieses Entscheidungswertes mit einem Schwellenwert; und
C3 Detektieren einer Störung, wenn der Entscheidungswert höher ist als der Schwellenwert.

**8.** Verfahren nach einem der Ansprüche 6 und 7,
**dadurch gekennzeichnet, dass** der Schwellenwert mit Hilfe von Detektions- und Fehlalarm-Wahrscheinlichkeiten bestimmt wird.

**9.** Verfahren nach einem der Ansprüche 6 bis 8,
**dadurch gekennzeichnet, dass** in Schritt C3 eine Störung detektiert wird, wenn der Entscheidungswert über einen Bestätigungszeitraum größer ist als der Schwellenwert.

**10.** Verfahren zum automatischen Detektieren der Funktionsstörung von Sensoren eines Flugzeugs,
**gekennzeichnet durch**:

A Bestimmen des Verlaufs der Koeffizienten der PLS-Regression, die mit Hilfe von explikativen Variablen und des beobachteten Parameters berechnet werden, wobei das Verfahren nach einem der Ansprüche 1 bis 5 durchgeführt wird, und
B Analysieren des Verlaufs dieser Koeffizienten, so dass eine Funktionsstörung bei einer Änderung des Verlaufs dieser Koeffizienten detektiert werden kann.

**11.** Verfahren nach Anspruch 10, **gekennzeichnet durch**:

- in Schritt A Berechnen eines Kriteriums, das für den intravektoriellen Verlauf des Koeffizientenvektors repräsentativ ist, mit Hilfe der Komponenten des Koeffizientenvektors; und
- in Schritt B Vergleichen dieses Kriteriums mit einem vorgegebenen Wert und Detektieren einer Funktionsstörung, wenn dieses Kriterium über einen Bestätigungszeitraum kleiner als der vorgegebene Wert ist.

**12.** Verfahren nach Anspruch 10, **gekennzeichnet durch**:

- in Schritt A Berechnen eines Kriteriums, das für die Statistik der Koeffizienten repräsentativ ist, mit Hilfe der Koeffizientenvektoren; und
- in Schritt B Vergleichen dieses Kriteriums mit einem vorgegebenen Wert und Detektieren einer Funktionsstörung, wenn dieses Kriterium über einen Bestätigungszeitraum größer als der vorgegebene Wert ist.

**13.** Vorrichtung zum automatischen Schätzen eines Flugparametervektors, der durch ein System (20) eines Flugzeugs (AC) verwendet wird, insbesondere ein System elektrischer Flugsteuerungen,
**dadurch gekennzeichnet, dass** sie Folgendes aufweist:

- Mittel (3) zum Empfangen der beobachteten Werte von einer Vielzahl von explikativen Werten, wobei ein explikativer Wert einen Parameter des Flugzeugs (AC) darstellt, der in den folgenden Verarbeitungen verwendet wird:
- Mittel (5) zum Schätzen eines Koeffizientenvektors in einem Beobachtungsfenster , der die Bestimmung einer linearen Beziehung zwischen dem gewünschten Flugparametervektor und den explikativen Werten ermöglicht, die sich auf eine lineare Modellierung bezieht, wobei eine PLS-Regression durchgeführt wird;
- Mittel (5) zum Verwenden dieses Koeffizientenvektors, der die Stärke des Modellfehlers in dem Beobachtungsfenster minimiert, um mit Hilfe der linearen Modellierung einen geschätzten Wert des Flugparametervektors zu berechnen; und
- Mittel (6A, 6B, 6C) zum Übertragen des so geschätzten Wertes an Benutzermittel (7, 8).

**14.** Vorrichtung nach Anspruch 13,
**dadurch gekennzeichnet, dass** sie des Weiteren Messmittel (4, 10) aufweist, um an dem Flugzeug (AC) Werte zu messen, die verwendet werden, um die beobachteten Werte zu erhalten.

**15.** Anordnung zum automatischen Detektieren einer Störung, die mindestens einen Flugparametervektor betrifft, der durch ein System (20) eines Flugzeugs (AC) verwendet wird, insbesondere ein System elektrischer Flugsteuerungen, **dadurch gekennzeichnet, dass** sie Folgendes aufweist:

- eine Vorrichtung (1) nach einem der Ansprüche 10 und 11, um in einem beliebigen Beobachtungsfenster $F_{n+1}$ Folgendes zu bestimmen:
  - eine *A-priori* genannte erste Schätzung des Flugparameters, die mit Hilfe von explikativen Variablen berechnet wird, die in dem Beobachtungsfenster $F_{n+1}$ beobachtet wurden, und eines Koeffizientenvektors, der in dem vorherigen Beobachtungsfenster $F_n$ geschätzt wurde; und
  - eine *A-posteriori* genannte zweite Schätzung des Flugparameters, die mit Hilfe von explikativen Variablen berechnet wird, die in dem Beobachtungsfenster $F_{n+1}$ beobachtet wurden, und eines Koeffizientenvektors, der auch in diesem Beobachtungsfenster $F_{n+1}$ geschätzt wurde;
- Mittel (10), um einen beobachteten Wert des Flugparametervektors in dem Beobachtungsfenster $F_{n+1}$ zu bestimmen; und
- Mittel (7), um einen Vergleich zwischen der ersten und zweiten Schätzung und dem beobachteten Wert zu realisieren, der das Detektieren einer Störung ermöglicht, die diesen Flugparametervektor betrifft.

**16.** Anordnung zum automatischen Detektieren der Funktionsstörung von Sensoren eines Flugzeugs, **dadurch gekennzeichnet, dass** sie Folgendes aufweist:

- eine Vorrichtung (1) nach einem der Ansprüche 13 und 14, um den Verlauf der Koeffizienten der PLS-Regression zu bestimmen, die mit Hilfe von explikativen Variablen und des beobachteten Parameters berechnet werden; und
- Mittel, um den Verlauf dieser Koeffizienten zu analysieren, so dass eine Funktionsstörung bei einer Änderung des Verlaufs dieser Koeffizienten detektiert werden kann.

**17.** Flugzeugsystem, insbesondere ein System elektrischer Flugsteuerungen, **dadurch gekennzeichnet, dass** es eine Vorrichtung (1) nach einem der Ansprüche 13 und 14 aufweist.

**18.** Flugzeugsystem, insbesondere ein System elektrischer Flugsteuerungen, **dadurch gekennzeichnet, dass** es eine Detektionsanordnung (12) nach einem der Ansprüche 15 und 16 aufweist.

## Claims

**1.** An automatic estimation process of a flight parameter vector used by a system (20) of an aircraft (AC), in particular an electrical flying control system, **characterized in that** the following sequence of successive steps is automatically implemented:

(a) the values being observed are received from a plurality of explanatory values, an explanatory value representing a parameter of the aircraft (AC) being used in the following processings;
(b) on an observation window, a coefficient vector is estimated, allowing a linear relationship to be determined between the flight parameter vector being searched and said explanatory values, which relationship is relative to a linear modeling by implementing a PLS regression;
(c) such estimated coefficient vector minimizing the power of the model error on the observation window is used to calculate, thru said linear modeling, an estimated value of said flight parameter vector; and
(d) the so-estimated value is transmitted to user means.

**2.** The process according to claim 1, **characterized in that** a flight parameter vector comprises at least one value of said flight parameter and at least one flight parameter.

**3.** The process according to any of claims 1 and 2, **characterized in that** said observation window is defined for a plurality of successive samples.

**4.** The process according to any of claims 1 to 3, **characterized in that** the operations b) and c) are iteratively performed by using the PLS regression and observed values of said flight parameter vector.

**5.** The process according to any of preceding claims,
**characterized in that** a further input variable, so-called adjusting input is used so as to be able to consider non centred signals, and more generally any non modelled uncertainty

**6.** An automatic detection method for one failure affecting at least one flight parameter vector used by a system (20) of an aircraft (AC), in particular an electrical flying control system,
**characterized in that** the following sequence of successive steps is performed on an automatic and repetitive way:

A/ by implementing the process specified in any of claims 1 to 5, on any observation window $F_{n+1}$ there are determined:

- a said *a priori* first estimation of said flight parameter, being calculated with the help of explanatory variables being observed on said observation window $F_{n+1}$ and a coefficient vector being estimated on the previous observation window $F_n$ ; and
- a said *a posteriori* second estimation of said flight parameter, being calculated thru explanatory variables observed on said observation window $F_{n+1}$ and a coefficient vector being also estimated on such observation window $F_{n+1}$ ;

B/ an observed value of said flight parameter vector is determined on said observation window $F_{n+1}$ ; and
C/ a comparison is carried out between said first and second estimations and said observed value, making possible to detect at least one failure affecting such flight parameter vector.

**7.** The method according to claim 6,
**characterized in that** at step C/, the following sequence of successive steps is carried out:

C1/ with the help of a decision function that is applied to said first estimation, to said second estimation and to the observed value of said flight parameter, a decision value is calculated;
C2/ such decision value is compared to a threshold; and
C3/ a failure is detected when said decision value is higher than said threshold.

**8.** The method according to any of claims 6 and 7, **characterized in that** said threshold is determined with the help of detection and false alarm probabilities.

**9.** The method according to any of claims 6 to 8, **characterized in that** at step C3/, a failure is detected when said decision value is higher than said threshold during a confirmation time.

**10.** The automatic detection method for a malfunction of sensors in an aircraft,
**characterized in that**:

A/ the development of the coefficients in the PLS regression, calculated by means of explanatory variables and the observed parameter is determined by implementing the process specified in any of claims 1 to 5; and
B/ the development of such coefficients so as to be able to detect a malfunction is analyzed upon a development change of such coefficients.

**11.** The method according to claim 10,
**characterized in that**:

- at step A/, thru components of the coefficient vector, a criterion is calculated, which is representative of the intra-vectorial development of said coefficient vector; and
- at step B/, such criterion is compared to a predetermined value and a malfunction is detected when such criterion is higher than said predetermined value during a confirmation duration.

**12.** The method according to claim 10,
**characterized in that**:

- at step A/, a criterion being representative of the statistics of said coefficients is calculated with the help of the coefficient vectors ; and

- at step B/, such criterion is compared to a predetermined value and a malfunction is detected when such criterion is lower than said predetermined value during a confirmation duration.

**13.** An automatic estimation device for a flight parameter vector used by a system (20) of an aircraft (AC), in particular an electrical flying order system,
**characterized in that** it comprises:

- means (3) to receive the observed values from a plurality of explanatory values, an explanatory value representing one parameter of the aircraft (AC) being used in the following processings;
- means (5) to estimate, on an observation window, a coefficient vector allowing a linear relationship to be determined between the flight parameter vector being searched and said explanatory values, relating to a linear modeling, by implementing a PLS regression;
- means (5) to use such estimated coefficient vector minimizing the power of the model error on the observation window so as to calculate, with the help of said linear modeling, an estimated value of said flight parameter vector; and
- means (6A, 6B, 6C) to transmit the so-estimated value to user means (7, 8).

**14.** The device according to claim 13,
**characterized in that** it comprises, in addition, measurement means (4, 10) so as to measure on the aircraft (AC) values being used to obtain said observed values.

**15.** An automatic detection assembly for a failure affecting at least one flight parameter vector used by a system (20) of an aircraft (AC), in particular an electrical flying control system,
**characterized in that** it comprises:

- one device (1) such as the one specified in any of claims 10 and 11, to determine on any observation window $F_{n+1}$ :

  • a said *a priori* first estimation of said flight parameter being calculated with the help of explanatory variables observed on said observation window $F_{n+1}$ and an estimated coefficient vector on the preceding observation window $F_n$ ; and
  • a said *a posteriori* second estimation of said flight parameter being calculated with the help of explanatory variables observed on said observation window $F_{n+1}$ and an estimated coefficient vector also on such observation window $F_{n+1}$;

- means (10) to determine an observed value of said flight parameter vector on said observation window $F_{n+1}$; and
- means (7) to perform a comparison between said first and second estimations and said observed value, thereby allowing to detect a failure affecting such flight parameter vector.

**16.** An automatic detection assembly for the malfunction of aircraft sensors, comprising:

- one device (1) such as the one specified in any of claims 13 and 14, to determine the development of the coefficients of the PLS regression being calculated with the help of explanatory variables and the observed parameter; and
- means to analyze the development of such coefficients so as to be able to detect a malfunction upon a development change for such coefficients.

**17.** An aircraft system, in particular electrical flying control system,
**characterized in that** it comprises a device (1) such as the one specified in any of claims 13 and 14.

**18.** The aircraft system, in particular electrical flying control system,
**characterized in that** it comprises a detection assembly (12) such as the one specified in any of claims 15 and 16.

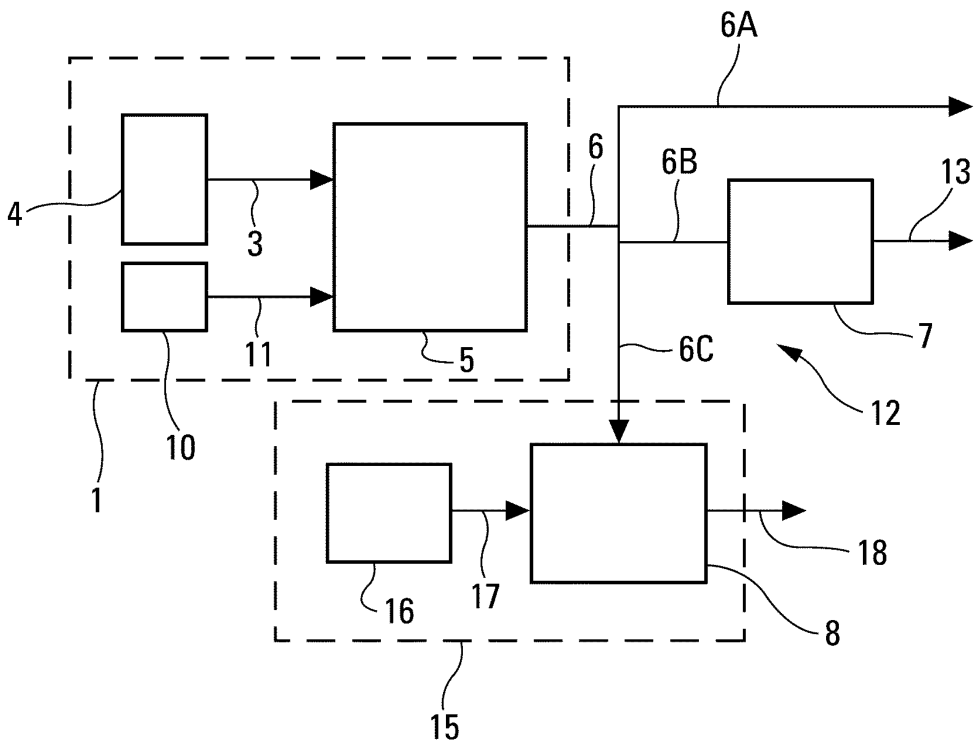
6A
6
6B
13
4
3
11
5
10
1
6C
7
12
16
17
18
8
15

Fig. 1

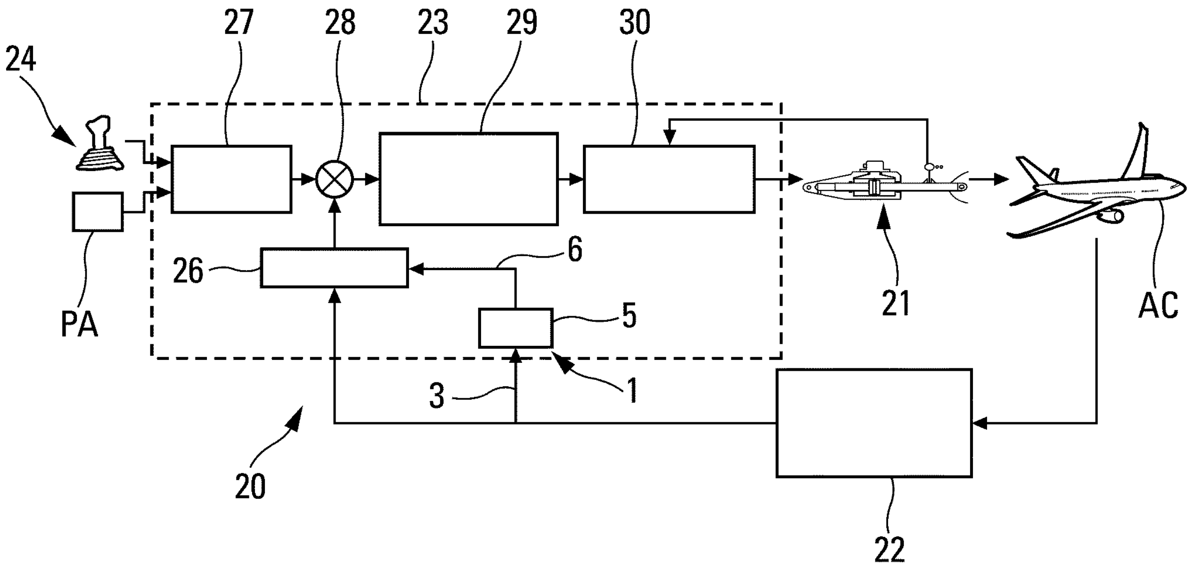
24
27
28
23
29
30
PA
26
6
5
3
1
20
21
AC
22

Fig. 2

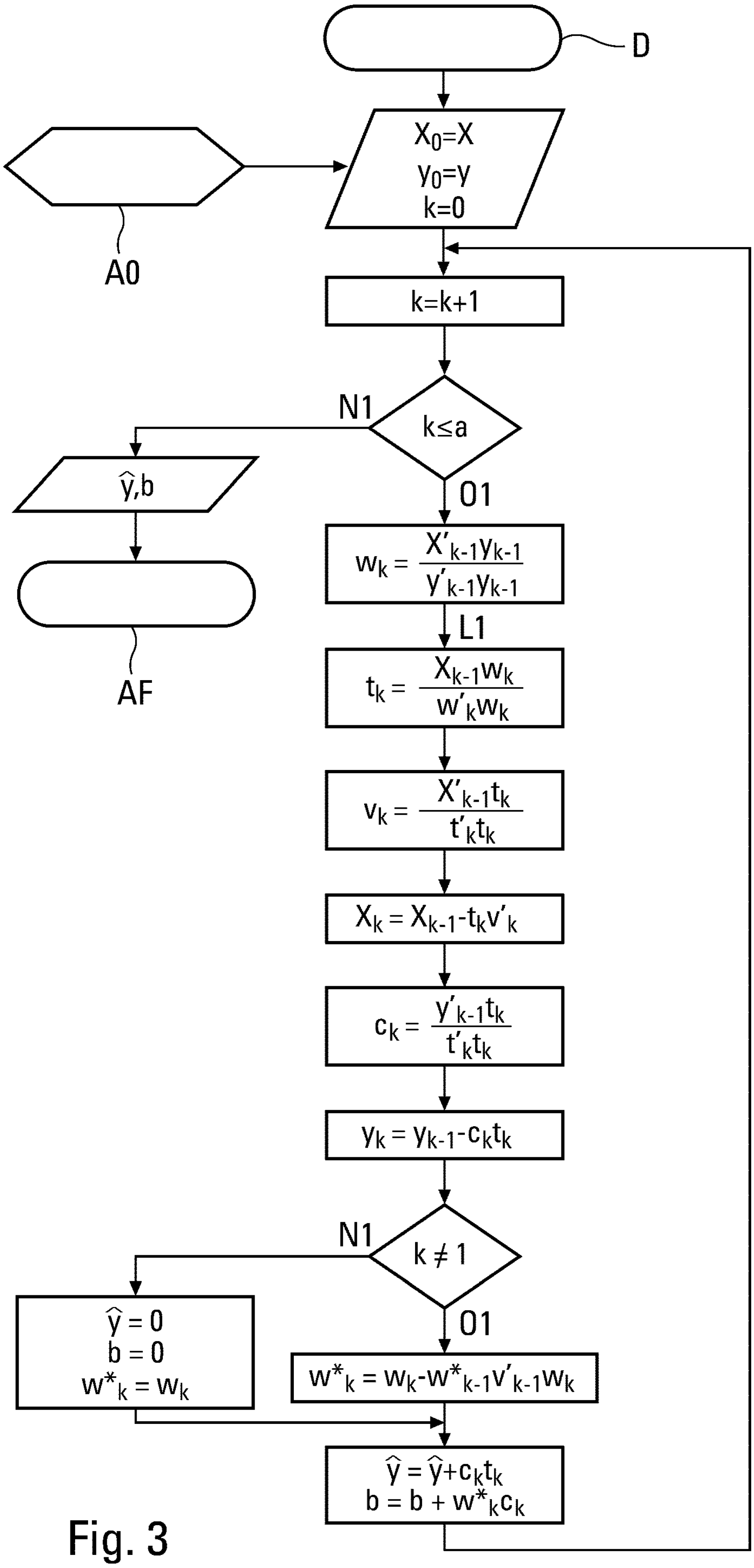
D
A0
AF
X0=X
y0=y
k=0
k=k+1
k≤a
N1
01
ŷ,b
wk = X'k-1yk-1 / y'k-1yk-1
L1
tk = Xk-1wk / w'kwk
vk = X'k-1tk / t'ktk
Xk = Xk-1-tkv'k
ck = y'k-1tk / t'ktk
yk = yk-1-cktk
k ≠ 1
N1
01
ŷ = 0
b = 0
w*k = wk
w*k = wk-w*k-1v'k-1wk
ŷ = ŷ+cktk
b = b + w*kck

Fig. 3

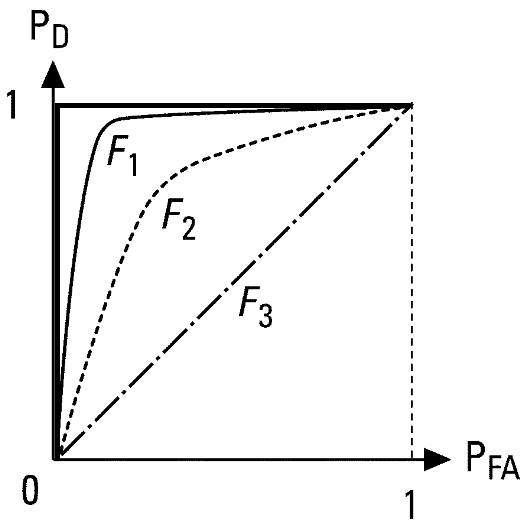

$P_D$
1
$F_1$
$F_2$
$F_3$
0
1
$P_{FA}$


Fig. 4

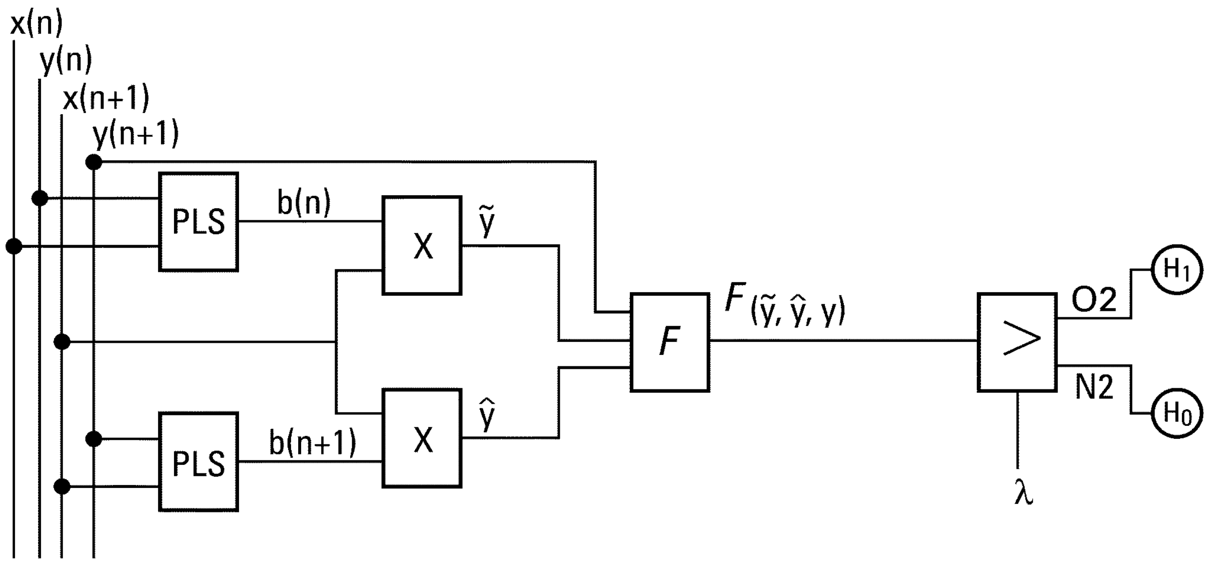

x(n)
y(n)
x(n+1)
y(n+1)
PLS
b(n)
X
$\tilde{y}$
PLS
b(n+1)
X
$\hat{y}$
F
$F(\tilde{y}, \hat{y}, y)$
>
λ
O2
N2
$H_1$
$H_0$


Fig. 5

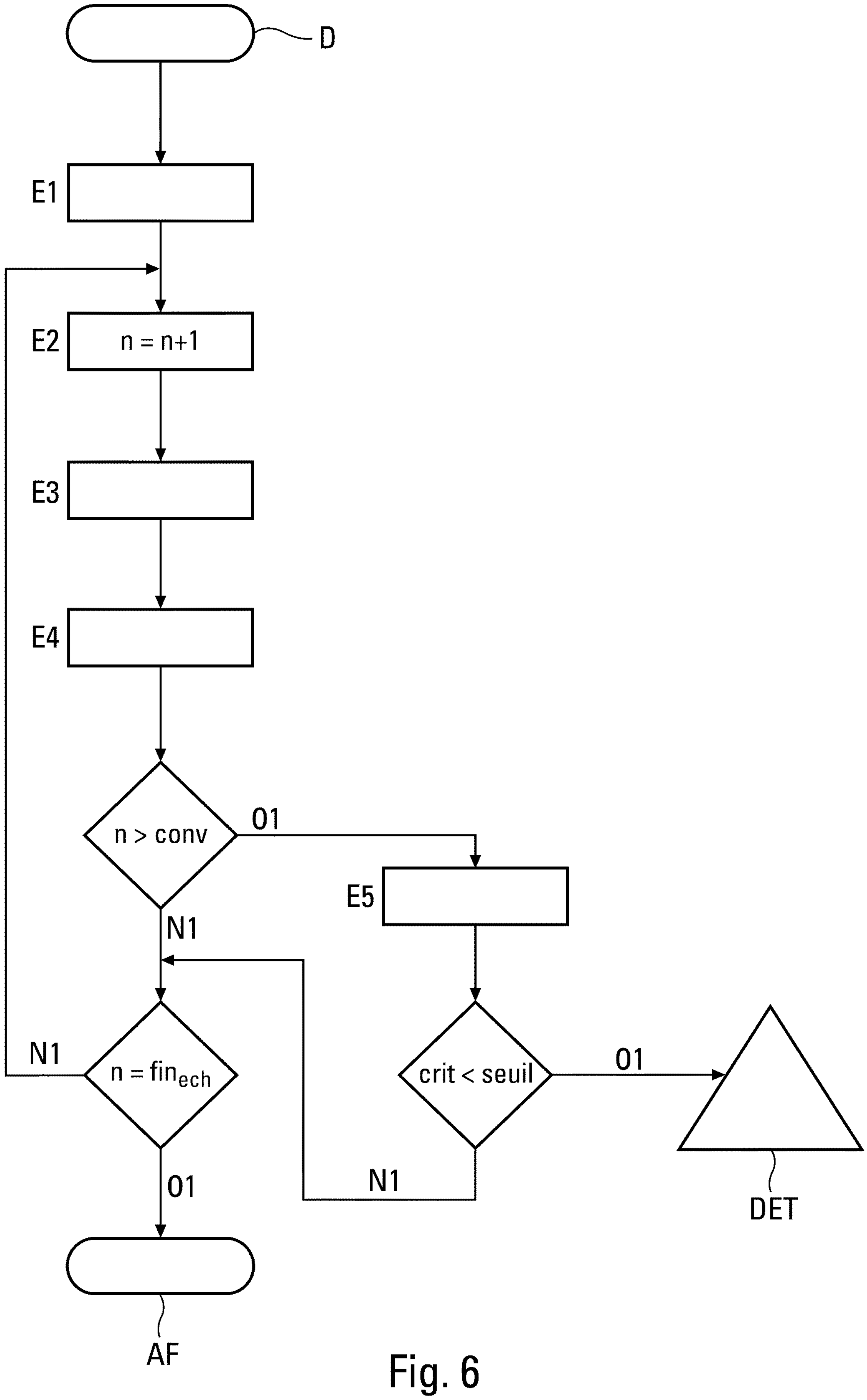
D
E1
E2
n = n+1
E3
E4
n > conv
01
E5
N1
N1
n = fin_ech
crit < seuil
01
01
N1
DET
AF

Fig. 6